# EUROPÄISCHE PATENTSCHRIFT

(11) **EP 2 655 708 B1**
(45) Veröffentlichungstag und Bekanntmachung des Hinweises auf die Patenterteilung: **06.04.2016**
(21) Anmeldenummer: 11808129.8
(22) Anmeldetag: 09.12.2011
(51) Int. Cl.: D01F 1/07, D01F 2/00

(54) **FLAMMGEHEMMTE CELLULOSISCHE MAN-MADE-FASERN**
FIREPROOF CELLULOSIC MAN-MADE FIBERS
FIBRES SYNTHÉTIQUES CELLULOSIQUES IGNIFUGÉES

(30) Priorität: 20.12.2010 AT 20962010; 23.05.2011 AT 7422011
(43) Veröffentlichungstag der Anmeldung: 30.10.2013
(73) Patentinhaber: Lenzing AG, 4860 Lenzing (AT)
(72) Erfinder: RÜF, Hartmut, A-4861 Schörfling (AT); BISJAK, Clemens, A-4852 Weyregg (AT); KRONER, Gert, A-4863 Seewalchen (AT)
(74) Vertreter: Hanemann, Otto
(86) Internationale Anmeldenummer: PCT/AT2011/000489
(87) Internationale Veröffentlichungsnummer: WO 2012/083318

(56) Entgegenhaltungen:
- WO-A1-96/05356
- WO-A1-97/02315
- US-A- 3 645 936
- US-A- 5 690 874

## Beschreibung

Die Erfindung betrifft cellulosische Viskose-, Modal- oder Lyocell-Fasern mit permanenten flammhemmenden Eigenschaften, wobei die flammhemmende Eigenschaft über die Zugabe eines oxidierten Kondensates aus einem Tetrakishydroxyalkylphosphoniumsalz mit Ammoniak und/oder einer stickstoffhaltigen Verbindung, welche eine oder mehrere Amingruppen enthält, zur Spinnmasse bzw. zur Spinnlösung erzielt wird und die Faser eine Festigkeit (Höchstzugkraft) im konditionierten Zustand von mehr als 18 cN/tex aufweist.

Lyocell-Fasern sind nach BISFA (The International Bureau for the Standardization of Man-made Fibers) cellulosische Man-made-Fasern, die aus einem organischen Lösungsmittel ohne Derivatisierung der Cellulose ersponnen werden (Direktspinnverfahren). Darunter fallen auch Fasern, die aus Lösungen von Cellulose in ionischen Flüssigkeiten ersponnen werden.

Eine Übersicht über die Methoden zur Flammhemmung von cellulosischen Textilien und die der Flammhemmung zugrundeliegenden Mechanismen liefert die Publikation: Horrocks, A. R.; Kandola, B. K. "Flame Retardant Cellulosic Textiles" Spec. Publ. - Royal Society of Chemistry, Band 224, Jahr 1998, Seiten 343-362. Die beschriebenen Methoden unterscheiden sich in der Art des für die Flammhemmung verantwortlichen Elements (hauptsächlich Phosphor, jedoch auch Stickstoff, Bor und Schwefel), dem Ort der Applikation (Oberflächenbehandlung hauptsächlich bei Baumwolle, Additiv in der Faserherstellung bei Man-made-fibres) und der Permanenz (Grad der Beständigkeit der flammhemmenden Eigenschaften gegenüber Wäschen).

Ein großer Teil an permanent flammgehemmten cellulosischen Textilien wird mittels Ausrüstung von Baumwollgeweben mit Tetra(hydroxymethyl)phosphonium-Derivaten (z.B. Proban® - Ausrüstung) bzw. mit N-methylol-dialkylphosphonopropionamiden (z. B. Pyrovatex CP®) hergestellt. Die ausgerüsteten Textilien weisen jedoch einen sehr harten Griff auf.

Unter den cellulosischen Kunstfasern (Man-made-Fasern) wurden für Viskosefasern als flammhemmende Additive in der Faserherstellung eine große Anzahl von Substanzen vorgeschlagen.
In der US 3,266,918 wird Tris(2,3-brompropyl)phosphat als Flammschutzmittel vorgeschlagen. Eine derartige Faser wurde einige Zeit industriell hergestellt, die Produktion wurde jedoch auf Grund der Toxizität des Flammschutzmittels eingestellt.

Eine als Flammschutzmittel genutzte Substanzklasse ist die der substituierten Phosphazene. Auf Basis dieser Substanzen wurde ebenfalls eine flammhemmende Viskosefaser industriell hergestellt (US 3,455,713). Das Flammschutzmittel ist jedoch flüssig, kann nur mit niedriger Ausbeute in Viskosefasern eingesponnen werden (ca. 75 Gew.-%) und neigt dazu aus der Faser zu migrieren und so der Faser eine unterwünschte Klebrigkeit zu verleihen.

Ähnliche Verbindungen wurden in Patenten beschrieben wurden jedoch nie für Viskosefasern im industriellen Maßstab erprobt (BP 1,521,404; US 2,909,446, US 3,986,882; JP 50046920; DE 2,429,254; GB 1,464,545; US 3,985,834; US 4,083,833; US 4,040,843; US 4,111,701; US 3,990,900; US 3,994,996; US 3,845,167; US 3,532,526; US 3,505,087; US 3,957,927). Alle diese Substanzen sind flüssig und weisen dieselben Nachteile auf wie für die US 3,455,713.

Neben dem oben genannten Tris(2,3-brompropyl)phosphat wurden eine Reihe anderer Phosphor- und Phosphonsäureester bzw. -amide als Flammschutzmittel für Viskosefasern beschrieben (DE 2,451,802; DE 2,622,569; US 4,193,805; US 4,242,138; JP 51-136914; DE 4,128,638)

Aus dieser Substanzklasse erfüllte bisher nur die Verbindung 2,2'-oxybis[5,5-dimethyl-1,3,2-dioxaphosphorinan]2,2'disulfid die Anforderungen hinsichtlich Wirksamkeit (erforderliche Einspinnmenge um EN ISO 15025:2002 zu bestehen), quantitativer Ausbeute beim Spinnprozess und Halogenfreiheit.

Neben den obengenannten Phosphorverbindungen wurden flammgehemmte Viskosefasern beschrieben, die Kieselsäure enthalten (EP 619,848; EP 1,753,900; EP 1,918,431). Diese Fasern bestehen den obengenannten Flammtest jedoch nur bei unverhältnismäßig hohen Gehalten an Kieselsäure, durch den hohen Gehalt an nicht zur Festigkeit beitragendem Pigment erreichen die Fasern nicht die für textilen Einsatz erforderlichen Faserfestigkeiten.

In einer Reihe von Patentanmeldungen wurden mögliche Wege beschrieben um auch Cellulosefasern, die nach dem Aminoxid-Verfahren hergestellt werden, flammhemmende Eigenschaften zu verleihen. Die WO 93/12173 beschreibt Phosphor-enthaltende TriazinVerbindungen als Flammschutzmittel für Kunststoffmaterialien, insbesondere Polyurethanschaum. In Anspruch 18 ist Cellulose genannt, gesponnen aus einer Lösung in einem tertiären Aminoxid, ohne ein Beispiel zu nennen hinsichtlich der tatsächlichen Eignung der Verbindungen als Flammschutzmittel für Cellulose.

Die WO 94/26962 beschreibt die Zugabe eines Tetrakishydroxymethylphosphoniumchlorid (THPC) - Harnstoff - Vorkondensates zur feuchten Faser vor der Trocknung, Ammoniak-Behandlung, Kondensation, Oxidation und Trocknung nach nochmaliger Wäsche. Kondensationsreaktionen auf Faserebene beeinträchtigen jedoch dramatisch die Fasereigenschaften (Versprödung).

In der WO 96/05356 werden Lyocell-Fasern mit Phosphorsäure und Harnstoff behandelt und bei 45 Minuten bei 150°C gehalten. Das Verfahren beeinträchtigt ebenfalls in starkem Ausmaß die mechanischen Eigenschaften der Fasern.

Die EP 0 836 634 beschreibt die Inkorporation von phosphorhaltigen Verbindungen als Flammschutzmittel für Regeneratcellulosefasern, insbesondere Lyocellfasern. Als Beispiel wird genannt 1,4-Diisobutyl-2,3,5,6-tetrahydroxy-1,4-dioxophosphorinan. Das Verfahren hat den Nachteil, dass die Inkorporationsausbeute des Flammschutzmittels nur 90% beträgt und somit Probleme in den geschlossenen Kreisläufen des Lyocell-Verfahrens auftreten.

Die U.S. Pat. 6,893,492 sowie die WO 2007/022552 beschreiben Tonmineralien (Montmorillonit bzw. Hektorit) als Zusatz zu Lyocell-Fasern. Die flammhemmende Wirkung dieser Zusätze ist jedoch unzureichend für textile Produkte, die den Vertikalflammtest, nach EN ISO 15025:2002 Verfahren B - Kantenbeflammung, bestehen müssen.

In der koreanischen Patentanmeldung Kongkae Taeho Kongbo 2009/025979 wird ein phosphorhaltiges Flammschutzmittel über eine Silizium-Sauerstoff-Gruppe an die Cellulose gebunden. Diese Bindung ist jedoch hydrolyseempfindlich, das Produkt eignet sich somit nicht für Waschartikel.

Keine der für das Lyocell-Verfahren beschriebenen Methoden hat technische Bedeutung erlangt. Ein wesentlicher Grund besteht darin, dass in diesem Prozess die geschlossenen Kreisläufe des Verfahrens besondere Anforderungen an die Ausbeute bei der Inkorporation eines festen oder flüssigen Zusatzes in die Spinnmasse stellen. Die Lösungsmittelrückgewinnung beträgt über 99%, somit reichern sich geringe Mengen infolge nicht quantitativer Einspinnausbeute in das Spinnbad/Waschwasser gelangende Verunreinigungen in den Kreisläufen an und führen zu Problemen beim Spinnen und bei der Aufarbeitung/Reinigung des Lösungsmittels.

Für flammgehemmte Lyocell-Fasern, hergestellt aus ionischen Flüssigkeiten ("lonic liquids"), sind bisher keine Patentanmeldungen bekannt geworden.

Die Verwendung von Tetrakishydroxymethylphosphoniumchlorid (THPC) - Harnstoff - Vorkondensaten zur flammhemmenden Ausrüstung von insbesondere Baumwolle mit den Prozessschritten Imprägnierung mit dem Vorkondensat - Behandlung mit Ammoniak - Kondensation - Oxidation ist bekannt (z.B. Proban® - Verfahren).

Die Verwendung von auskondensierten Produkten ist in der US 3,645,936 beschrieben. Ein THPC/Harnstoff/NH₃-Polymer zeigt gemäß der unteren Tabelle auf Spalte 4 der US 3,645,936 in einer Viskosefaser keine Flammschutzwirkung. Nach der Lehre des Patents ergibt die Inkorporation eines Ammoniak / Tetrakishydroxymethylphosphoniumchlorid - Polymers (THPC/NH₃-Polymer) allein bei der Einspinnmenge wie sie um den Flammtest zu bestehen erforderlich ist (20%), jedoch Fasern mit ungenügender Festigkeit (1,08 g/den = ca. 9,7 cN/tex).

Überraschenderweise hat sich gezeigt, dass flammhemmende cellulosische Viskose-, Modal- oder Lyocell-Fasern mit einer höheren Festigkeit erhältlich sind, die als Flammschutzmittel eine flammhemmende Substanz enthalten, die auf einer aus der US 3,645,936 bekannten Verbindungsklasse basiert.

Die erfindungsgemäßen flammhemmenden cellulosischen Viskose-, Modal- oder Lyocell-Fasern enthalten eine flammhemmende Substanz in Form eines oxidierten Kondensates aus einem Tetrakishydroxyalkylphosphoniumsalz mit Ammoniak und/oder einer stickstoffhaltigen Verbindung, welche eine oder mehrere Amingruppen enthält, und sind dadurch gekennzeichnet, dass die Faser im konditionierten Zustand eine Festigkeit von mehr als 18 cN/tex aufweist.

Die stickstoffhaltige Verbindung ist vorzugweise Harnstoff oder Ammoniak.

Die Herstellung von Viskose- und Modalfasern ist an sich bekannt. Die Zugabe von funktionellen Additiven erfolgt hier im Allgemeinen mittels Spinndosierung einer wässrigen Dispersion.

Besonders geeignet ist ein Verfahren umfassend die Schritte
- Herstellung einer Viskose aus Cellulosexanthogenat
- unter Zusatz eines Modifizierungsmittels
- Zusatz von 5 Gew.-% bis 50 Gew-% bezogen auf Cellulose der flammhemmenden Substanz in Form einer wässrigen Dispersion des Pigmentes
- Verspinnen der Spinmasse durch eine Spinndüse in ein Spinnbad
- Verstrecken der ausgefällten Filamente
- Nachbehandlung durch Wäsche, Bleiche, Avivage
- Schneiden zu Stapelfasern,
und ist dadurch gekennzeichnet, dass zur Herstellung der Faser
- der eingesetzte Zellstoff einen R-18 Gehalt von 93 - 98% aufweist
- der Cellulosegehalt der Viskose zwischen 4 Gew.-% und 7 Gew.-% liegt
- das Alkaliverhältnis zwischen 0,7 und 1,5 liegt
- der Schwefelkohlenstoffeinsatz 36 Gew.-% bis 42 Gew.-% bezogen auf Cellulose beträgt
- zwischen 1 Gew.-% und 5 Gew.-% eines Modifizierungsmittels bezogen auf Cellulose zur Viskose zugesetzt werden
- der Spinngammawert der Viskose zwischen 50 und 68, vorzugsweise zwischen 55 und 58 liegt
- die Spinnviskosität 50 bis 120 Kugelfallsekunden beträgt
- die Temperatur des Spinnbades 34°C bis 48 °C beträgt
- folgende Spinnbadkonzentrationen eingesetzt werden
   o H2SO4 68-90 g/l
   o Na2SO4 90-160 g/l
   o ZnSO4 30-65 g/l
- der Endabzug aus dem Spinnbad mit einer Geschwindigkeit zwischen 15 und 60 m/min erfolgt

Die weitere erfindungsgemäße flammhemmende cellulosische Lyocell-Faser wird nach einem Direktspinnverfahren hergestellt, worin das Direktlösemittel für die Cellulose bevorzugt ein tertiäres Aminoxid ist. Besonders geeignet ist N-Methylmorpholinoxid (NMMO) als Direktlösemittel, das bereits kommerziell eingesetzt wird.

Auch ionische Flüssigkeiten, wie z.B. aus der DE 10 2005 062608 bekannt, können als Direktlösemittel für Cellulose eingesetzt werden.

Die Herstellung von Lyocell-Fasern nach dem Aminoxid-Verfahren erfolgt in den folgenden Schritten:
1) In-Kontakt-Bringen des zerkleinerten Zellstoffs mit einer wässrigen N-Methylmorpholinoxid (NMMO)-Lösung
2) Abdampfen der überschüssigen Wassermenge unter Scherung bis zur Bildung einer faserfreien Spinnmasse
3) Extrusion der Spinnmasse durch Düsen, Verstrecken in einem Luftspalt, Ausfällung der Cellulose in einem wässriges NMMO enthaltendem Spinnbad, Wäsche und Trocknen.

Alternativ dazu kann die Spinnmasseherstellung auch durch direkte Auflösung des Zellstoffs in ca. 13% Wasser enthaltendem NMMO (NMMO-Monohydrat) in z.B. einem Extruder erfolgen.

Die Zugabe des Flammschutzmittels kann als Pulver oder als Dispersion in Wasser oder wässrigem NMMO in Schritt 1 erfolgen.

Die Zugabe des Flammschutzmittels kann auch zur Spinnmasse erfolgen in Form einer Dispersion in NMMO, wobei das NMMO einen Wassergehalt zwischen 13 Gew.-% und 20 Gew.-% aufweist.

Alternativ kann das Flammschutzmittel als Pulver in einem Extruder zugesetzt werden.

Die mittlere Teilchengröße des Flammschutzmittels soll deutlich unter dem halben Faserdurchmesser liegen, bevorzugt unter 10 % des Faserdurchmessers.

Ein Flammschutzmittel, das einem zusätzlichen Reinigungsschritt mit verdünnter Säure unterzogen wurde, hat sich für das Lyocell-Verfahren als besonders geeignet erwiesen.

Ein besonders geeignetes Verfahren zur Herstellung eines Flammschutzmittels zur Verwendung in cellulosischen Fasern umfasst die Schritte:
(a) Umsetzen mindestens einer Tetrakishydroxyalkylphosphoniumverbindung mit mindestens einer Stickstoffverbindung ausgewählt aus der Gruppe Harnstoff, Thioharnstoff, Biuret, Melamin, Ethylenharnstoff, Guanidin und Dicyandiamid, um ein Polymer zu erhalten, wobei das molare Verhältnis der Tetrakishydroxymethylphosphoniumverbindung zu der Stickstoffverbindung im Bereich von 1 : (0,05 bis 2,0), bevorzugt im Bereich von 1 : (0,5 bis 1,5), besonders bevorzugt im Bereich von 1 : (0,65 bis 1,2) liegt,
(a') Quervernetzen des in Verfahrensschritt (a) erhaltenen Polymers mit Hilfe von Ammoniak und
(b) Oxidation des in dem quervernetzten Polymer enthaltenen Phosphors durch Hinzugeben eines Oxidationsmittels, um das Flammschutzmittel zu erhalten.

Der erste Schritt des Herstellungsverfahrens (a) bzw. die Schritte (a) und (a') dient bzw. dienen der Herstellung eines Polymers durch Umsetzen der mindestens einen Tetrakishydroxyalkylphosphoniumverbindung mit mindestens einer Stickstoffverbindung ausgewählt aus der Gruppe Ammoniak, Harnstoff, Thioharnstoff, Biuret, Melamin, Ethylenharnstoff, Guanidin und Dicyandiamid.

Die Hydroxyalkylgruppen der Tetrakishydroxyalkylphosphoniumverbindungen sind Hydroxymethyl-, Hydroxyethyl, Hydroxypropyl- oder Hydroxybutylgruppen.

Bei der mindestens einen Tetrakishydroxyalkylphosphoniumverbindung, handelt es sich besonders bevorzugt um eine Tetrakishydroxymethylphosphoniumverbindung, nachfolgend auch "THP" genannt, mit der allgemeinen Formel (P⁺(CH₂OH)₄)ₜ X⁻, oder auch um Gemische solcher Verbindungen, wobei X⁻ ein Anion und t die Wertigkeit dieses Anions bedeuten. t kann dabei eine Ganze Zahl von 1 oder 2 bedeuten. Geeignet als Anionen X⁻ sind beispielsweise Sulfat-, Hydrogensulfat-, Phosphat-, Mono- oder Dihydrogenphosphat-, Acetat- oder Halogenanionen, wie Fluorid, Chlorid und Bromid.

Bei der mindestens einen Stickstoffverbindung die in den Verfahrensschritten (a) und (a') mit der Tetrakishydroxyalkylphosphoniumverbindung umgesetzt wird, handelt es sich allgemein um eine Verbindung, zwei Verbindungen, drei Verbindungen oder mehrere Verbindungen ausgewählt aus der Gruppe Ammoniak, Harnstoff, Thioharnstoff, Biuret, Melamin, Ethylenharnstoff, Guanidin und Dicyandiamid. Gemäß einer bevorzugten Ausführungsform der Erfindung handelt es sich bei der Stickstoffverbindung um Harnstoff. Gemäß einer besonders bevorzugten Ausführungsform der Erfindung wird in Verfahrenschritt (a) mindestens eine Stickstoffverbindung ausgewählt aus der Gruppe Harnstoff, Thioharnstoff, Biuret, Melamin, Ethylenharnstoff, Guanidin und Dicyandiamid umgesetzt, und in einem darauffolgenden Verfahrensschritt (a') mit Ammoniak vernetzt.

Die Umsetzung in Verfahrensschritt (a) und gegebenenfalls auch in Verfahrenschritt (a'), wird gemäß einer bevorzugten Ausführungsform der Erfindung in einem Lösungsmittel durchgerührt. Das bevorzugt verwendete Lösungsmittel ist Wasser. Der Gehalt der mindestens zwei in Verfahrensschritt (a) bzw. (a') umzusetzenden Verbindungen kann über weite Bereiche variieren und beträgt allgemein 10 Gew.-% bis 90 Gew.-%, bevorzugt 20 Gew.-% bis 40 % Gew.-%, bezogen auf die Gesamtmasse des in Verfahrensschritt (a) bzw. (a') eingesetzten Reaktionsansatzes, welcher mindestens die zwei umzusetzenden Verbindungen und das Lösungsmittel enthält.

Das molare Verhältnis der Tetrakishydroxyalkylphosphoniumverbindung zu der Stickstoffverbindung kann über weite Bereiche hinweg variieren und beträgt allgemein im Bereich von 1 : (0,05 bis 2,0), bevorzugt 1 : (0,5 bis 1,5), besonders bevorzugt 1 : (0,65 bis 1,2). Durch die zielgerichtete Auswahl dieses molaren Verhältnisses wird sichergestellt dass sich das erfindungsgemäß hergestellte Flammschutzmittel nicht bzw. nur in geringem Maße in den bei der Herstellung von flammgeschützten Cellulosefasern eingesetzten Lösungsmitteln löst.

Die Umsetzung im Verfahrensschritt (a) bzw. (a') wird allgemein bei einer Temperatur im Bereich von 40 bis 120 °C, bevorzugt bei einer Temperatur im Bereich von 80 bis 100 °C über einen Zeitraum von 1 bis 10 Stunden, bevorzugt über einen Zeitraum von 2 bis 6 Stunden vorgenommen.

Nach Verfahrensschritt (a) kann man gemäß einer allgemeinen Ausführungsform der Erfindung den Reaktionsansatz, der das Polymer enthält auf Raumtemperatur, das heißt auf eine Temperatur im Bereich von etwa 15 bis 25°C, bevorzugt auf eine Temperatur von 20 °C abkühlen bzw. abkühlen lassen, bevor man das Polymer in Verfahrensschritt (a') mit Ammoniak weiter vernetzt.

Gemäß einer vorteilhaften Ausführungsform der Erfindung fügt man dem Polymer nach der Durchführung von Verfahrensschritt (a) und vor Durchführung des Verfahrensschritts (a'), und somit vor dem Durchführen der Quervernetzung mittels Ammoniaks ein oder mehrere Dispergiermittel hinzu. Diese Dispergiermittel sind bevorzugt ausgewählt aus der Gruppe Polyvinylpyrrolidon, C₁₄-C₁₇-Alkylsulfonaten, Hydroxypropylzellulose (HPC), und Polyethylenglycol (PEG). Das Dispergiermittel dient dabei der Stabilisierung der Bestandteile der Zusammensetzung und verhindert in der nachfolgenden Quervernetzungsreaktion, in Verfahrensschritt (a') eine Agglomeration der Polymere. Üblicherweise wird das mind. eine Dispergiermittel in einer Konzentration im Bereich von 0,01 Gew.-% bis 3 Gew.-%, bevorzugt im Bereich von 0,1 Gew.-% bis 1 Gew.-%, bezogen auf den Reaktionsansatz eingesetzt.

Wird die Herstellung des Polymers zweistufig, das heißt mit den Verfahrensschritten (a) und (a') durchgeführt, so wird in Verfahrensschritt (a') Ammoniak in einem molaren Verhältnis zu der Tetrakishydroxymethylphosphoniumverbindung im Bereich von (1 bis 4,0) : 1, bevorzugt im Bereich von (1,2 bis 3,5) : 1, besonders bevorzugt im Bereich von (1,5 bis 2,0) : 1 eingesetzt. Dabei wird gemäß einer bevorzugten Ausführungsform der Erfindung Ammoniak hinzugegeben, bis der Reaktionsansatz einen pH-Wert im Bereich von 7 bis 10, bevorzugt im Bereich von 8 bis 9 erreicht. Hierdurch wird das in Schritt (a) erhaltene Polymer mittels des Ammoniaks in Verfahrensschritt (a') quervernetzt und es wird eine Vorstufe des Flammschutzmittels erhalten, welche in dem nachfolgenden Schritt, Verfahrensschritt (b), oxidiert wird. Die Umsetzungsdauer in Verfahrensschritt (a') liegt allgemein im Bereich von 1 min. bis 60 min.

Die Oxidation im Verfahrensschritt (b) kann mit Hilfe der üblichen Oxidationsmittel wie Wasserstoffperoxid, Ammoniumperoxidisulfat, Luft(Sauerstoff) und Perchlorsäure vorgenommen werden. Das molare Verhältnis zwischen der Vorstufe des Flammschutzmittels und dem Oxidationsmittel beträgt allgemein etwa 1 : 1 bis 1 : 1,2.

Das in Verfahrensschritt (b) erhaltene Flammschutzmittel wird gemäß einer bevorzugten Ausführungsform in einem nachfolgenden Verfahrensschritt (c) mit einer Säure gewaschen, dabei kann das Flammschutzmittel zuvor mittels üblicher, dem Fachmann bekannter Methoden, beispielsweise mittels Filtration vorgereinigt werden. Die in Verfahrensschritt (c) eingesetzte Säure ist allgemein ausgewählt aus der Gruppe HCl, H₂SO₄, H₃PO₄ und Essigsäure. Die Säure wird allgemein in einer Konzentration von etwa 1 bis 75 %, bevorzugt in einer Konzentration von etwa 1 bis 20%, besonders bevorzugt in einer Konzentration von etwa 1 bis 9 % verdünnt in einem Lösungsmittel ausgewählt aus der Gruppe Wasser, Methanol, Ethanol, N,N-Dimethylformamid (DMF) und N-Methylmorpholinoxid (NMMO) oder eine Mischung dieser eingesetzt. Das zur Verdünnung der Säure bevorzugte Lösungsmittel ist Wasser. Die Menge an Säure, die zum Waschen des in Verfahrensschritts (b) erhaltenen Flammschutzmittels eingesetzt wird, kann über weite Bereiche variieren. Allgemein wird ein Volumenanteil Flammschutzmittel mit einem Volumenanteil Säure zum Waschen eingesetzt, gemäß einer bevorzugten Ausführungsform wird ein doppelter Volumenanteil, gemäß einer besonders bevorzugten Ausführungsform wird das dreifache Volumen an Säure zum Waschen eingesetzt.

Das in Verfahrensschritt (b) erhaltene Flammschutzmittel kann nachfolgend, wie vorstehend beschrieben mit einer Säure gewaschen werden und daraufhin ein- oder mehrmalig mit einem Lösungsmittel gewaschen werden, wobei zum Waschen das einfache bis doppelte Volumen an Lösungsmittel, bezogen auf das Volumen des Flammschutzmittels eingesetzt wird. Zum Waschen wird bevorzugt dabei ein Lösungsmittel ausgewählt aus der Gruppe Wasser, Methanol, Ethanol, N,N-Dimethylformamid (DMF), N-Methylmorpholinoxid (NMMO), oder eine Mischung dieser eingesetzt. Bevorzugt wird mit Wasser gewaschen.

Das Flammschutzmittel kann nun anschließend mittels üblicher Trennverfahren, wie Filtration, Trocknung von dem eingesetzten Lösungsmittel abgetrennt werden. Allgemein beträgt der Restlösemittelgehalt daran anschießend 0 bis 40 Gew.-%, bevorzugt 0 bis 20 Gew.-%, besonders bevorzugt 0 bis 10 Gew.-%.

Zur Verbesserung der Einarbeitbarkeit in Fasern bzw. Fasermaterialien, beispielsweise im Rahmen des Lyocell- oder Viskoseverfahrens ist es von Vorteil, das Flammschutzmittel zum Beispiel in einer Kugel-, Sand-, Glasperlen- oder Körnerquarz-Mühle, bis auf eine mittlere Partikelgröße im Bereich von 0,5 bis 5 µm, vorzugsweise 1 µm zu vermahlen. Das Vermahlen kann dabei mittels Nassmahlung oder Trockenmahlung erfolgen.

### Herstellungsbeispiel 1:

### Herstellung eines Produktes mit einem Molverhältnis Harnstoff zu Tetrakishydroxvmethylphosponiumsulfat (THPS) von 1 zu 0,77

66,2 kg Wasser, 10,5 kg Harnstoff und 59,5 kg THPS (75 %ig) werden vorgelegt und anschließend für einen Zeitraum von 3 Stunden bei 95 bis 98 °C unter Rühren erhitzt. Der Reaktionsansatz wird daran anschließend auf einer Temperatur unterhalb 30 °C abgekühlt, es werden 2,1 kg Duralkan™ TL 844 (PVP 25%) und 30 kg Ammoniak (25 %ig) eingeleitet. Der pH-Wert wird mit Ammoniak auf einen Wert von etwa 8 eingestellt und der Reaktionsansatz wird 1 min. reagieren gelassen. Daran anschließend werden 21,3 kg Wasserstoffperoxidlösung (30 %ig) eingeleitet. Der enthaltene Feststoff (Flammschutzmittel) wird bei einer Temperatur von 40 °C über einen Trommelfilter abgetrennt, anschließend mit einer volumenäquivalenten Menge Wasser gewaschen. Es wurde ein weißes Produkt mit einem Feststoffgehalt von 35 Gew.-% erhalten.

### Herstellungsbeispiel 2:

### Herstellung eines Produktes mit einem Molverhältnis Harnstoff zu THPS 1 zu 0,77

68 kg Wasser, 10,5 kg Harnstoff und 59,5 kg THPS (75 %ig) werden vorgelegt und anschließend für einen Zeitraum von 5 Stunden bei einer Temperatur von 95 bis 98 °C gerührt. Die Reaktionsmischung wird daraufhin auf eine Temperatur unterhalb 30 °C abgekühlt, es werden daraufhin 0,5 kg Hostapur™ SAS und 30 kg Ammoniak (25 %ig) zugegeben. Der pH-Wert des Reaktionsansatzes wird mit Ammoniak auf einen Wert von 8 eingestellt, und der Reaktionsansatz wird 1 min. reagieren gelassen. Anschließend werden 21,3 kg Wasserstoffperoxidlösung (30 %ig) eingeleitet. Der enthaltene Feststoff (Flammschutzmittel) wird bei einer Temperatur von 40 °C über einen Trommelfilter abgetrennt, anschließend mit einer volumenäquivalenten Menge Wasser, dann mit einer volumenäquivalenten Menge 3%iger HCl und anschließend mit mindestens einer volumenäquivalenten Menge Wasser gewaschen. Es wurde ein weißes Produkt mit einem Feststoffgehalt von 35 Gew.-% erhalten.

### Die so hergestellten oxidierten Kondensate aus einem

Tetrakishydroxyalkylphosphoniumsalzes mit einer stickstoffhaltigen Verbindung eignen sich besonders als Flammschutzschutzmittel in einem cellulosischen Formkörper.

Bevorzugt wird als stickstoffhaltige Verbindung Harnstoff oder Ammoniak eingesetzt.

Die Tetrakishydroxyalkylphosphoniumverbindung ist bevorzugt ein Tetrakishydroxymethylphosphoniumsalz.

Der Anteil des Flammschutzmittels in der cellulosischen Man-made-Faser, in Form einer Viskose- oder Lyocell-Faser, kann zwischen 5 Gew.-% und 50 Gew.-%, bevorzugt zwischen 10 Gew.-% und 30 Gew.-%, besonders bevorzugt zwischen 15 Gew.-% und 25 Gew.-% bezogen auf die Faser liegen. Bei zu geringem Anteil ist der flammhemmende Effekt unzureichend, bei über der empfohlenen Grenze liegenden Anteilen verschlechtern sich übermäßig die mechanischen Eigenschaften der Faser. Mit diesen Anteilen kann eine flammhemmende cellulosische Man-made-Faser erhalten werden, die dadurch gekennzeichnet ist, dass die Festigkeit im konditionierten Zustand von 18 cN/tex bis 50 cN/tex beträgt.

Zusätzlich kann die flammhemmende cellulosische Man-made-Faser noch zusätzliche Additive, wie Farbstoffe oder Bakterizide, enthalten.

Die cellulosische Man-made-Faser gemäß der Erfindung erfüllt im Endprodukt (textiles Flächengebilde), bei Prüfung nach EN ISO 15025:2002 Verfahren B - Kantenbeflammung, die Anforderungen gemäß EN ISO 14 116 (ehemals EN 533) classification "limited flame spread index 3".

Im Prüfverfahren nach EN ISO 15025:2002 wird eine definierte Flamme von einem festgelegten Brenner für 10 s auf die Oberfläche (Verfahren A) oder den unteren Rand (Verfahren B) von vertikal angeordneten Textilproben gerichtet.
Das Ausbreiten der Flamme und das Nachglimmen sowie die Bildung von Partikelablösungen und brennenden Partikelablösungen sind festzuhalten.

Die Anforderungen in EN ISO 14 116 für den "limited flame index 3" sind wie folgend:
- an keinem Prüfkörper darf die Flamme den oberen Rand erreichen
- kein Prüfkörper darf brennende Partikel abgeben
- das Nachglimmen darf sich nicht vom verkohlten auf den unbeschädigten Teil den Prüfkörpers ausbreiten
- die Nachbrennzeit muss unter zwei Sekunden liegen

Aus der erfindungsgemäßen Faser kann ein Garn gesponnen werden, das zu einem textilen Flächengebilde weiterverarbeitet werden kann. Die erfindungsgemäße Faser kann auch zur Herstellung von Nonwovens verwendet werden.

Das aus der erfindungsgemäßen Faser hergestellte textile Flächengebilde bzw. Nonwoven erfüllte, bei Prüfung nach EN ISO 15025:2002 Verfahren B - Kantenbeflammung, die Anforderungen gemäß EN ISO 14 116 classification "limited flame spread index 3".

Das Garn, textile Flächengebilde bzw. Nonwoven enthaltend die erfindungsgemäße flammgehemmte cellulosische Man-made-Faser kann in Mischung mit Fasern natürlichen oder synthetischen Ursprungs vorliegen. Die Fasern natürlichen oder synthetischen Ursprungs können selbst inhärent flammhemmend sein oder flammhemmend ausgerüstet sein. Beispiele dafür sind (flammgehemmte) Polyester, Modacryl, para- und meta-Polyaramide, Polyamidimid (Kermel^{®}), (flammgehemmte) Wolle, Polybenzimidazol (PBI), Polyimid (P84^{®}), Polyamide, (flammgehemmte) Polyamide, flammgehemmte Acrylfasern, Melaminfasern, Polyphenylensulfid (PPS), Polytetrafluorethylen (PTFE), Glasfasern, Baumwolle, Seide, Carbonfasern, oxidierte thermisch stabilisierte Polyacrylnitrilfasern (PANOX^{®}) und elektrisch leitfähige Fasern, sowie Mischungen dieser Fasern

Besonders eignen sich zur Mischung mit den erfindungsgemäßen flammgehemmten cellulosischen Man-made-Fasern para- und meta-Polyaramid- und/oder Polyimid-Fasern.

Der Einsatzzweck der erfindungsgemäßen Faser oder Fasermischungen enthaltend die erfindungsgemäße Faser sind Schutzbekleidung jeder Art wie z.B. Feuerwehruniformen, Schutzbekleidung gegen den Kontakt mit Metallschmelzen, Unterwäsche und Uniformteile im militärischen Bereich, textile Flächen im öffentlichen Bereich wie z.B. Vorhänge und Sitzbezüge, textile Flächen in Verkehrsmitteln wir z.B. Flugzeugsitze, aus textilem Material oder einem Nonwoven bestehende flammhemmende Außen- oder Zwischenschichten (Fireblocker) z.B. für Matratzen.

### Beispiel 1:

Aus einem Buchenzellstoff (R18 = 97,5%) wurde eine Viskose der Zusammensetzung 6,0% Cellulose/6,5% NaOH hergestellt unter Einsatz von 40% CS2. Der Viskose mit einem Spinngammawert von 62 und einer Viskosität von 120 Kugelfallsekunden wurde ein Modifizierungsmittel (2% Dimethylamin und 1 % Polyethylenglykol 2000, jeweils bezogen auf Cellulose) sowie 22% bezogen auf Cellulose des Flammschutzmittels nach Herstellungsbeispiel 1, in Form einer 12%igen Dispersion in 60%igem NMMO zudosiert. Die Mischviskose wurde mit 60 µm Düsen in ein Spinnbad der Zusammensetzung 72 g/l Schwefelsäure, 120 g/l Natriumsulfat und 60 g/l Zinksulfat mit einer Temperatur von 38°C gesponnen, in einem Zweitbad (Wasser mit 95°C) auf 120% verstreckt, und mit 42 m/min abgezogen. Die Nachbehandlung (heiße verdünnte H2SO4/Wasser/Entschwefelung/Wasser/Bleiche/Wasser/Avivage) erfolgte nach bekannten Methoden.
Die getrockneten Fasern wurden zu einem Garn Nm 30 und dieses wiederum mittels einer Rundstrickmaschine zu einem Strickstrumpf Flächengewicht 200 g/m2 verarbeitet.
Der Strickstrumpf wurde dem Vertikalflammtest nach EN ISO 15025:2002 Verfahren B - Kantenbeflammung unterzogen. Die Ergebnisse des Flammtests sind in Tabelle 3 und die Faserdaten sind in Tabelle 1 dargestellt.

**Tabelle 1**

| Beispiel | Titer | Höchstzugkraft konditioniert | Höchstzugkraftdehnung konditioniert |
|---|---|---|---|
| | Dtex | cN/tex | % |
| 1 | 2,17 | 20,1 | 12, 3 |

### Beispiel 2:

22% bezogen auf Cellulose des Flammschutzmittels nach Herstellungsbeispiel 1 in Form einer 12%ige Dispersion in 60%igem NMMO wurden dem Slurry (Gemisch Zellstoff /wässriges NMMO) zugesetzt und Wasser abgedampft zur Herstellung einer faserfreien Spinnlösung der Zusammensetzung 12% Cellulose/77% NMMO/11% Wasser. Als Zellstoff wurde ein Sulfat-Hochalphazellstoff eingesetzt.
Die Spinnmasse wurde nach dem bekannten Nass-Trocken-Spinnprozess bei einer Spinntemperatur von 110°C mit Hilfe einer 100µm Düse in ein Spinnbad enthaltend 25% NMMO mit einer Temperatur von 20°C zu 2,2 dtex Fasern versponnen. Die gewaschenen und getrockneten Fasern wurden wie in Beispiel 1 zu einem Strickstrumpf verarbeitet und dem Vertikalflammtest nach EN ISO 15025:2002 Verfahren B - Kantenbeflammung unterzogen. Die Ergebnisse des Flammtests sind in Tabelle 3 und die Faserdaten sind in Tabelle 2 dargestellt.

### Beispiel 3:

Es wurde wie in Beispiel 2 vorgegangen, jedoch wurde ein Flammschutzmittel nach Herstellungsbeispiel 2 eingesetzt..Die Ergebnisse des Flammtests sind in Tabelle 3 und die Faserdaten sind in Tabelle 2 dargestellt.

**Tabelle 2**

| Beispiel | Ausbeute Flammschutzmittel | Höchstzugkraft konditioniert | Höchstzugkraftdehnung konditioniert |
|---|---|---|---|
| | % des Einsatzes | cN/tex | % |
| 2 | 95,1 | 34,1 | 13,4 |
| 3 | 99,3 | 34,3 | 11,6 |

**Tabelle 3**

| Beispiel | Phosphor-Gehalt | Brennverhalten nach EN ISO 15025:2002 | |
|---|---|---|---|
| | | Nachbrennzeit | Grad der Zerstörung |
| | % | S | mm |
| 1 | 2,1 | 0 | 186 |
| 2 | 2,2 | 0 | 69 |
| 3 | 2,5 | 0 | 7 |

## Patentansprüche

1. Flammhemmende cellulosische Viskose-, Modal- oder Lyocell-Faser enthaltend eine flammhemmende Substanz in Form eines oxidierten Kondensates aus einem Tetrakishydroxyalkylphosphoniumsalz mit Ammoniak und/oder einer stickstoffhaltigen Verbindung, welche eine oder mehrere Amingruppen enthält, **dadurch gekennzeichnet, dass** die Faser im konditionierten Zustand eine Festigkeit von mehr als 18 cN/tex aufweiset.

2. Flammhemmende Fasergemäß Anspruch 1, **dadurch gekennzeichnet, dass** die stickstoffhaltige Verbindung aus der Gruppe Harnstoff, Ammoniak, Thioharnstoff. Biuret, Melamin, Ethyienharnstoff. Guanidin und Dicyandiamid ausgewählt ist.

3. Flammhemmende Faser gemäß Anspruch 1 oder 2, **dadurch gekennzeichnet, dass** das Tetrakishydroxyalkylphosphoniumsalz bevorzugt ein Tetrakishydroxymethylphosphoniumsalz ist,

4. Flammhemmende Faser nach einem der vorgehenden Ansprüche, **dadurch gekennzeichnet, dass** die Festigkeit von 18 cN/tex bis 50 cN/tex beträgt.

5. Flammhemmende Faser nach einem der vorgehenden Ansprüche, **dadurch gekennzeichnet, dass** die Faser zusätzliche Additive, wie Farbpigmente oder Bakterizide, enthält.

6. Verfahren zur Herstellung flammgehemmter Viskose bzw, Modal-Fesern nach einem der Ansprüche 1 bis 5 aus einer Spinnmasse umfassend die Schritte
- Herstellung einer Viskose aus Cellulosexanthogenat
- unter Zusatz eine Modifizierungsmittels
- Zusatz von 5 Ges.-% bis 50 Gew-% bezogen auf Cellulose der flammhemmenden Substanz in Form einer wässrigen Dispersion des Pigmentes
- Verspinnen der Spinnmasse durch eine Spinndüse in ein Spinnbad
- Verstrecken der ausgefällten Filamente
- Nachbehandlung durch Wäsche, Bleiche, Avivage
- Schneiden zu Stapelfasern,
**dadurch gekennzeichnet, dass** zur Herstellung der Faser
- der eingesetzte Zelistoffeinen R-18 Gehalt von 93-98% aufweist
- der Cellulosegehlt der Viskose zwischen 4 und 7% liegt
- das Alkaliverhältnis zwischen 0,7 und 1,5 liegt
- der Schwefelkohlenstoffeinsatz 36 Gew.-% bis 42 Gew.-% bezogen auf Cellulose beträgt
- zwischen 1 Gew.-% und 5 Gew.-% eines Modifizierungsmittels bezogen auf Cellulose zur Viskose zugesetzt werden
- der Spinngammawert der Viskose zwischen 50 und 68, vorzugsweise zwischen 65 und 58 liegt
- die Spinnviskosität 50 bis 120 Kugelfallaekunden beträgt
- die Temperatur des Spinnbades 34 bis 48°C beträgt
- folgende Spinnbadkonzentrationen eingesetzt werden
o H2SO4 68-90 g/l
o Na2SO4 90-160 g/l
o ZnSO4 30-65 g/l
- der Endabzug aus dem Spinnbad mit einer Geschwindigkeit zwischen 15 und 60 m/min erfolgt.

7. Verfahren zur Herstellung flammgehemmter Lyocell-Fasern nach einem der Ansprüche 1 bis 6 nach dem Lyocell-Verfahren, **dadurch gekennzeichnet, dass** vor der Extrusion der Spinnmasse eine flammhemmende Substanz zugesetzt wird und der Anteil der flammhemmenden Substanz in der Cellulosefaser 5 Gew.-% bis 50 Gew-%, bevorzugt 10 Gew.-% bis 30 Ges.%. besonders bevorzugt 15 Gew.-% bis 25% beträgt.

8. Verfahren zur Herstellung flammgehemmter Fasern nach einem der Ansprüche 1 bis 7, **dadurch gekennzeichnet, dass** die flammhemmende Substanz vor dem Zusatz zur Spinnmasse bzw. vor der Herstellung der Dispersion mit Säure und anschließend mit Wasser gewaschen wird.

9. Gam enthaltend eine flammgehemmte Faser nach einem der Ansprüche 1 bis 8.

10. Verwendung einer flammgehemmten Faser nach einem der Ansprüche 1 bis 9 zur Herstellung eines textilen Flächengebildes bzw. eines Nonwovens.

11. Textiles Flächengebilde bzw. Nonwoven enthaltend eine flammgehemmte Faser nach einem Ansprüche 1 bis 10, **dadurch gekennzeichnet, dass** das textile Flächengebilde bzw, das Nonwoven bei Prüfung nach EN ISO 15025:2002 Verfahren B - Kantenbeflammung, die Anforderungen gemäß EN ISO 14 116 classification "limited flame spread index 3" erfüllt,

12. Garn, textiles Flächengebilde bzw, Nonwoven enthaltend eine flammgehemmte Faser nach einem Ansprüche 1 bis 11, **dadurch gekennzeichnet, dass** die flammgehemmte Faser in Mischung mit Fasern natürlichen oder synthetischen Ursprungs vorliegt.

13. Garn, textiles Flächengebilde bzw. Nonwoven nach Anspruch 12, **dadurch gekennzeichnet, dass** die Mischung Fasern, die selbst inhärent flammhemmend sind oder flammhemmend ausgerüstet sind, umfasst.

14. Garn, textiles Flächengebilde bzw. Nonwoven nach Anspruch 12 oder 13, **dadurch gekennzeichnet, dass** die flammgehemmte Faser in Mischung mit Polyester, Modacryl, para- und meta-Aramide, Polyamidimid, flammgehemmte Wolle, Polybenzimidazol, Polyimid, Polyamide, Polyamide, flammgehemmte Acrylfasern, Melaminfasern, Polyphenylensulfid, Polytetrafluorethylen, Glasfasern, Baumwolle, Seide, Carbonfasern, oxidierte thermisch stabilisierte Polyacrylnitrilfasern und elektrisch leitfähige Fasern, sowie Mischungen dieser Fasern vorliegt.

15. Garn, textiles Flächengebilde bzw. Nonwoven enthaltend eine flammgehemmte Faser nach einem der Ansprüche 1 bis 12, **dadurch gekennzeichnet, dass** die flammgehemmte Faser in Mischung mit meta- oder para-Polyaramid- bzw. Polyimid-Fasern vorliegt.

16. Verwendung eines oxidierten Kondensates aus einer Tetrakishydroxyalkylphosphoniumverbindung mit einer stickstoffhaltigen Verbindung als Flammschutzschutzmittel in einer Faser gemäß einem der vorgehenden Ansprüche, **dadurch gekennzeichnet, dass** das molare Verhältnis der Tetrakishydroxyalkylphosphoniumverbindung zu der Stickstoffverbindung im Bereich von 1 : (0,05 bis 2,0), bevorzugt 1 : (0,5 bis 1,5), besonders bevorzugt 1 : (0,65 bis 1,2) beträgt.

17. Verwendung nach Anspruch 16, **dadurch gekennzeichnet, dass** die stickstoffhaltige Verbindung aus der Gruppe Harnstoff, Ammoniak, Thioharnstoff, Biuret, Melamin, Ethylenharnstoff, Guanidin und Dicyandiamid ausgewählt ist.

18. Verwendung nach Anspruch 16 und 17, **dadurch gekennzeichnet, dass** die stickstoffhaltige Verbindung Harnstoff oder Ammoniak ist.

19. Verwendung nach Anspruch 16 bis 18, **dadurch gekennzeichnet, dass** die Hydroxyalkylgruppe des Tetrakishydroxyalkylphosphonlumsalzes ausgewählt ist aus Hydroxymethyl-, Hydroxyethyl, Hydroxipropyl- oder Hydroxybutylgruppen.

20. Verwendung nach Anspruch 16 bis 19, **dadurch gekennzeichnet, dass** die Tetrakishydroxyalkylphosphoniumverbindung ein Tetrakishydroxymethylphosphoniumsalz ist.

## Claims

1. Flame-retardant cellulosic viscose-, modal- or lyocell-fiber containing a flame-retardant substance in the form of an oxidized condensate of a tetrakis hydroxyalkyl phosphonium salt with ammonia and/or a nitrogenous compound which contains one or several groups of amine groups, **characterized in that** the fiber has a strength of more than 18 cN/tex in a conditioned state.

2. Flame-retardant fiber according to claim 1, **characterized in that** the nitrogenous compound is selected from the group of urea, ammonia, thiourea, biuret, melamine, ethylene urea, guanidine and 2-cyanoguanidine.

3. Flame-retardant fiber according to claim 1 or 2, **characterized in that** the tetrakis hydroxyalkyl phosphonium salt is preferably a tetrakis hydroxymethyl phosphonium salt.

4. Flame-retardant fiber according to one of the previous claims, **characterized in that** the tenacity is from 18 cN/tex to 50 cN/tex.

5. Flame-retardant fiber according to one of the previous claims, **characterized in that** the fiber contains additional additives, such as colour pigments or bactericides.

6. Process for the production of flame-retardant viscose- or modal-fibers according to one of claims 1 to 5 from a spinning mass comprising the steps
- production of a viscose of cellulose xanthogenate
- adding a modification agent
- addition of 5 weight percent to 50 weight percent of a flame-retardant agent in relation to the cellulose in the form of a aqueous dispersion of the pigment
- spinning of spinning mass through a spinneret into a spinning bath
- stretching of precipitated filaments
- after-treatment via washing, bleaching, finishing
- cutting to staple fibers,
and is **characterized in that** for the production of the fiber
- the pulp used has a R-18 content of 93-98%
- the cellulose content of the viscose is between 4 and 7%
- the alkali ratio is between 0.7 and 1.5
- the carbon disulphide used equals 36 weight percent to 42 weight percent in relation to the cellulose
- between 1 weight percent and 5 weight percent of a modifying agent, in relation to the cellulose, is added to the viscose
- the spinning gamma value of the viscose lies between 50 und 68, preferably between 55 and 58
- die spinning viscosity equals 50 to 120 falling ball seconds
- the temperature of the spin bath is between 34 to 48°C
- the following spin bath concentrations are used
o H₂SO₄ 68-90 g/l
o Na₂SO₄ 90-160 g/l
o ZnSO₄ 30-65 g/l
- the final drawing-off from the spinning bath is performed at a speed of between 15 und 60 m/min.

7. Process for the production of flame-retardant lyocell-fibers according to one of claims 1 to 6 according to the lyocell process, **characterized in that** a flame-retardant substance is added prior to the extrusion of the spinning mass and the share of flame-retardant substance in the cellulose fiber equals 5 weight percent to 50 weight percent, preferably 10 weight percent to 30 weight percent and most preferably 15 weight percent to 25%.

8. Process for the production of flame-retardant fibers according to one of claims 1 to 7, **characterized in that** the flame-retardant substance is washed with acid and finally with water before adding to the spinning mass as such, respectively before producing a dispersion thereof.

9. Yarn containing a flame-retardant fiber according to one of claims 1 to 8.

10. Use of a flame-retardant fiber according to one of claims 1 to 9 for the production of a textile material respectively a non-woven.

11. Textile materials respectively non-wovens containing a flame-retardant fiber according to one of claims 1 to 10, **characterized in that** the textile fabric respectively the non-woven fulfils the demands in accordance with EN ISO 14 116 classification "limited flame spread index 3", when testing according to EN ISO 15025:2002 Process B - edge flaming.

12. Yarn, textile fabric respectively non-woven containing a flame-retardant fiber according to one of claims 1 to 11, **characterized in that** the flame-retardant fiber is blended with fibers of a natural or synthetic origin.

13. Yarn, textile fabric respectively non-woven according to claim 12, **characterized in that** the blend comprises fibers, which themselves are inherently flame-retardant or treated with a flame-retardant agent.

14. Yarn, textile fabric respectively non-woven according to claim 12 or 13, **characterized in that** the flame-retardant fiber is present in a blend with polyester, modacryl, para- and meta-Aramide, polyamidimide, flame-retardant wool, polybenzimidazol, polyimide, polyamide, polyamide, flame-retardant acrylic fibers, melamine fibers, polyphenylene sulphide, polytetrafluorethylene, glass fibers, cotton, silk, carbon fibers, oxidized thermally stabilized polyacrylonitrile fibers and electrically conductive fibers and blends of these fibers.

15. Yarn, textile fabric respectively non-woven containing a flame-retardant fiber according to one of claims 1 to 12, **characterized in that** the flame-retardant fiber is present in a blend with meta- or para-polyaramide- respectively polyimide fibers.

16. Use of an oxidized condensate from a tetrakis hydroxyalkyl phosphonium compound with a nitrogenous compound as a flame-retardant agent in a fiber according to one of the previous claims, **characterized in that** the molar ratio of tetrakis hydroxyalkyl phosphonium compound to the nitrogen compound is in the range of 1 : (0,05 to 2,0), preferably 1 : (0.5 to 1.5), most preferably 1 : (0.65 to 1.2).

17. Use according to claim 16, **characterized in that** the nitrogenous compound is selected from the group of urea, ammonia, thiourea, biuret, melamine, ethylene urea, guanidine and dicyandiamide.

18. Use according to claim 16 and 17, **characterized in that** the nitrogenous compound is urea or ammonia.

19. Use according to claim 16 to 18, **characterized in that** the hydroxyalkyl group of the tetrakis hydroxyalkyl phosphonium salt is selected from hydroxymethyl, hydroxyethyl, hydroxypropyl or hydroxybutyl groups.

20. Use according to claim 16 to 19, **characterized in that** the tetrakis hydroxyalkyl phosphonium compound is a tetrakis hydroxymethyl phosphonium salt.

## Revendications

1. Fibre cellulosique viscose, modal ou lyocell ignifuge contenant une substance ignifuge sous forme d'un condensat oxydé d'un sel de tétrakis(hydroxyalkyle)phosphonium avec de l'ammoniaque et/ou un composé azoté qui contient un ou plusieurs groupes amines, **caractérisée en ce que** la fibre à l'état conditionné présente une résistance supérieure à 18 cN/tex.

2. Fibre ignifuge selon la revendication 1, **caractérisée en ce que** le composé azoté a été choisi dans le groupe urée, ammoniaque, thio-urée, biuret, mélamine, éthylène-urée, guanidine et dicyandiamide.

3. Fibre ignifuge selon la revendication 1 ou 2, **caractérisée en ce que** le sel de tétrakis(hydroxyalkyle)phosphonium est de préférence un sel de tétrakis(hydroxyméthyle)phosphonium.

4. Fibre ignifuge selon l'une des revendications précédentes, **caractérisée en ce que** la résistance est comprise entre 18 cN/tex et 50 cN/tex.

5. Fibre ignifuge selon l'une des revendications précédentes, **caractérisée en ce que** la fibre contient des additifs supplémentaires, comme des pigments colorés ou des bactéricides.

6. Procédé de fabrication d'une fibre viscose ou modal ignifugée selon l'une des revendications 1 à 5 à partir d'une masse à filer, comprenant les étapes
- fabrication d'une viscose à partir de xanthogénate de cellulose
- avec adjonction d'un agent de modification
- ajout du pigment de 5 à 50 % en masse, rapportée à la cellulose de la substance ignifuge, sous forme d'une dispersion aqueuse
- filage de lamasse à filer par une filière dans un bain de coagulation
- étirage des filaments précipités
- traitement ultérieur par lavage, blanchiment, avivage
- coupe en fibres discontinues,
**caractérisé en ce que**, pour la fabrication des fibres
- la cellulose employée présente une teneur définie par un R-18 de 93 à 98%
- la teneur en cellulose de la viscose est comprise entre 4 et 7 %
- le rapport alcalin est compris entre 0,7 et 1,5
- l'emploi de sulfure de carbone est de 36 à 42 % en masse, rapportée à la cellulose
- entre 1 et 5 % en masse d'un agent de modification, rapporté à la cellulose, est ajouté à la viscose
- la valeur de filage gamma de la viscose est comprise entre 50 et 68, de préférence entre 55 et 58
- la viscosité de filage est de 50 à 120 secondes de chute de bille
- la température du bain de coagulation est comprise entre 34 et 48 °C
- les concentrations utilisées pour le bain de coagulation sont les suivantes
o H2SO4 68-90 g/l
o Na2SO4 90-160 g/l
o ZnSO4 30-65 g/l
- l'extraction finale du bain de coagulation se fait à une vitesse comprise entre 15 et 60 m/mn.

7. Procédé de fabrication d'une fibre lyocell ignifugée selon l'une des revendications 1 à 6, selon le procédé lyocell, **caractérisé en ce qu'**une substance ignifuge est ajoutée avant l'extrusion de la masse à filer, et que la part de substance ignifuge dans la fibre de cellulose est de 5 à 50 % en masse, de préférence de 10 à 30 % en masse, ou encore mieux de 15 à 25 % en masse.

8. Procédé de fabrication de fibres ignifugées selon l'une des revendications 1 à 7, **caractérisé en ce que** la substance ignifuge est lavée à l'acide, puis à l'eau, avant son adjonction à la masse à filer ou avant la fabrication de la dispersion.

9. Fil contenant une fibre ignifugée selon l'une des revendications 1 à 8.

10. Utilisation d'une fibre ignifugée selon l'une des revendications 1 à 9 pour la fabrication d'un produit textile ou d'un non-tissé.

11. Produit textile ou non-tissé contenant une fibre ignifugée selon l'une des revendications 1 à 10, **caractérisé en ce que** le produit textile ou le non-tissé testé selon EN ISO 15025:2002, procédure B - Exposition à la flamme du bas du vêtement, remplit les exigences de la classification « Propagation de flamme limitée » selon EN ISO 14 116, index 3.

12. Fil, produit textile ou non-tissé contenant une fibre ignifugée selon l'une des revendications 1 à 11, **caractérisé en ce que** la fibre ignifugée est présente sous forme de mélange avec des fibres d'origine naturelle ou synthétique.

13. Fil, produit textile ou non-tissé selon la revendication 12, **caractérisé en ce que** le mélange comprend des fibres qui sont elles-mêmes intrinsèquement ignifuges ou disposent d'un apprêtage ignifuge.

14. Fil, produit textile ou non-tissé selon la revendication 12 ou 13, **caractérisé en ce que** la fibre ignifugée est présente sous forme de mélange avec du polyester, du modacrylique, des para- et méta-aramides, du polyamidimide, de la laine ignifugée, du polybenzimidazole, du polyimide, des polyamides, des fibres acryliques ignifugées, des fibres mélamines, du polysulfure de phénylène, du polytétrafluoroéthylène, des fibres de verre, du coton, de la soie, des fibres carbones, des fibres polyacrylonitriles oxydées stabilisées thermiquement et des fibres conductrices, ainsi que des mélanges de ces fibres.

15. Fil, produit textile ou non-tissé contenant une fibre ignifugée selon l'une des revendications 1 à 12, **caractérisé en ce que** la fibre ignifugée est présente sous forme de mélange avec des fibres méta- ou para-polyaramides et/ou polyimides.

16. Utilisation d'un condensat oxydé d'un composé de tétrakis(hydroxyalkyle)phosphonium avec un composé azoté comme retardateur de flamme dans une fibre conformément à l'une des revendications précédentes, **caractérisé en ce que** le rapport molaire entre le composé de tétrakis(hydroxyalkyle)phosphonium et le composé azoté est de 1 pour (0,05 à 2,0), de préférence de 1 pour (0,5 à 1,5), ou encore mieux de 1 pour (0,65 à 1,2).

17. Utilisation selon la revendication 16, **caractérisée en ce que** le composé azoté a été choisi dans le groupe urée, ammoniaque, thio-urée, biuret, mélamine, éthylène-urée, guanidine et dicyandiamide.

18. Utilisation selon les revendications 16 et 17, **caractérisée en ce que** le composé azoté est de l'urée ou de l'ammoniaque.

19. Utilisation selon les revendications 16 à 18, **caractérisée en ce que** le groupe hydroxyalkyle du sel de tétrakis(hydroxyalkyle)phosphonium est choisi parmi les groupes hydroxyméthyle, hydroxyéthyle, hydroxypropyle ou hydroxybutyle.

20. Utilisation selon les revendications 16 à 19, **caractérisée en ce que** le composé de tétrakis(hydroxyalkyle)phosphonium est un sel de tétrakis(hydroxyméthyle)phosphonium.
